# EUROPEAN PATENT SPECIFICATION

(11) **EP 0 289 091 B1**
(45) Date of publication and mention of the grant of the patent: **01.12.1993**
(21) Application number: 88200804.8
(22) Date of filing: 26.04.1988
(51) Int. Cl.: A01F 15/07, A01F 15/08, B65H 16/06

(54) **Apparatus for supporting rolls of net in round balers**
Vorrichtung zum Stützen von Netzgeweberollen in Rundballenpressen
Système de support pour rouleaux de filet dans des presses à balles rondes

(30) Priority: 01.05.1987 US 45947; 01.05.1987 US 45948
(43) Date of publication of application: 02.11.1988
(73) Proprietor: NEW HOLLAND BELGIUM N.V., B-8210 Zedelgem (BE)
(72) Inventor: Merritt, John H., III, New Holland Pennsylvania 17557 (US); Makofka, Stanley J., New Holland Pennsylvania 17557 (US)
(74) Representative: Vandenbroucke, Alberic

(56) References cited:
- DE-A- 2 705 101
- DE-A- 2 743 967
- DE-C- 850 617
- FR-A- 2 552 969
- GB-A- 2 144 102
- NL-A- 6 517 212
- US-A- 4 296 595

## Description

The present invention relates generally to round balers utilized for making cylindrical bales of crop material and, more particularly, to a dispensing device for selectively introducing wrapping material such as netting material into the round baler's bale forming mechanism so that the finished bale can be wrapped with an outer layer of wrapping material.

Net dispensing mechanisms for use in conjunction with round balers to wrap the exterior of a finished round bale with a layer of netting material is a relatively recent feature incorporated into round balers. One such net dispensing device can be found on the Claas Model Rollant 44 round baler which utilizes a tray to physically hold a roll of netting material, the netting material being fed between a driven resilient feed roller and a rigid pinch roller by which means the netting can be fed into the bale chamber of the round baler for wrapping around a completed round bale therewithin.

The aforementioned Claas round baler utilizes a tray in which the roll of netting material is merely laid to provide a source of netting material for the net dispensing apparatus. This Claas baler utilizes a spring loaded braking bar pressing the roll against the sides of the tray to restrict movement of the roll of netting material both longitudinally and circumferentially when dispensing the netting material into the bale forming mechanism of the round baler. A more detailed description of this prior art net dispensing device can be found with reference to, on the one hand, the detailed description of Fig. 7 and, on the other hand, GB-A-2.144.102.

Other round balers equipped with wrapper means are disclosed in US-A-4.296.595 and FR-A-2.552.969; both of which suggest the use of a spindle for supporting a roll of wrapping material on the baler. According to US-A-4.296.595, this spindle, which is in the form of a rod, is insertable through a roll of wrapping material and is engageable with supports associated with the opposing sidewalls of the baler. According to FR-A-2.552.969, the mounting spindle is telescopic and furthermore is hingably mounted at one end on one sidewall of the baler. When swung outwardly about its pivot axis, a roll of wrapping material may be slid thereon to be supported thereby via the intermediary of a pair of opposing hubs which positionally adjustably are provided on the respective telescopic parts of the spindle and which are disposed to permit said roll to rotate relative thereto for dispensing wrapping material into the bale chamber. The other end of this spindle is connectable to a lever construction on the opposite sidewall of the baler and which is disposed to permit telescopic adjustment of the portions of the spindle and of the hubs fixedly positioned thereon in a manner to cause the hubs to exert an adjustable braking action on the roll supported thereon to restrain freewheeling rotational movement of this roll relative to said hubs. From the above description, it will be evident that the wrapping material support means according to FR-A-2.552.969 have a quite complicated design.

Sheet dispensing apparatuses in general also are known in other fields of the art and, in this connection, reference is made to e.g. NL-A-65.17.212 which shows a dispensing apparatus comprising a supporting means for a source of sheet material; said supporting means including conical hubs disposed for mounting a roll of sheet material on a spindle and said supporting means being provided within a housing to which access can be gained through a side opening.

Starting from US-A-4.296.595, it is the object of the present invention to provide a wrapper means which is simple in construction and yet, not only facilitates the loading of rolls of wrapping material on a round baler and provides flexibility for as well accommodating various lengths of such rolls as for centring the position of these rolls with respect to the bale forming mechanism but, moreover, also enables a satisfactory application of wrapping material on bales formed with the baler. This satisfactory application implies that, on the one hand, functional problems are avoided during the application of wrapping material and, on the other hand, the wrapping material is applied on the completed bales under a predetermined tension so as to properly form stabilize these bales and to prevent unacceptable expansion thereof.

According to the invention, a round baler is provided having wrapper means for selectively dispensing wrapping material from a wrapping material supply source into a bale forming chamber defined between opposite sidewalls; said wrapper means comprising supporting means including a spindle insertable through a roll of wrapping material forming said wrapping material supply source and engageable with supports associated with both sidewalls to support said wrapping material supply source on the baler and which is characterized in that :
- the spindle is provided with a pair of spaced apart hubs which are engageable with a roll of wrapping material to support this roll on said spindle; said hubs, on the one hand, being positionally adjustable along the length of the spindle to accommodate various widths of rolls of wrapping material and to permit centring of any selected roll with respect to the bale forming chamber and, on the other hand, being rotatable relative to this spindle to permit, during operation of the wrapper means, free rotation of this roll, and
- the wrapper means further also comprise braking means including a braking member and overcenter biasing means cooperable with the braking member for, in use, urging this braking member into braking engagement with said roll to restrain said free rotational movement thereof.

Preferably, the supports associated with the sidewalls are formed by slots disposed to receive the opposing ends of the spindle and which extend downwardly at an angle to the horizontal from an upper opening to a closed bottom. A guide member may be affixed to each sidewall adjacent to and beneath each respective slot to facilitate the loading into a proper position within the round baler of the spindle upon which the roll of wrapping material is mounted.

Alternatively, one of the opposing sidewalls may have first means for receiving a first end of the spindle and the other of the opposing sidewalls may have an opening formed therein to accommodate the passage of a roll of wrapping material therethrough. In this arrangement, a gate member with second means for receiving the second end of the spindle is detachably connectable to the other sidewall to support a roll of wrapping material within the area of the opening in said other sidewall. The spindle has a length which is sufficient to span the distance between the opposed sidewalls so that this spindle, with a roll of wrapping material mounted thereon, may be mounted between the first receiving means on the one sidewall and the second receiving means on the gate member attached to the other sidewall.

It thus will be appreciated that an apparatus is provided which enables a convenient loading of cumbersome rolls of wrapping material into a round baler; which is capable of accommodating various widths of rolls of wrapping material as well as various inner diameters of the cores of such rolls and which also facilitates the centring of any such roll with respect to the bale forming mechanism of the round baler. The present invention also provides means which facilitate the rotatable mounting of a roll of wrapping material while enabling a satisfactory application of the wrapping material on bales formed with the baler.

The advantages of this invention will become apparent upon consideration of the following disclosure of the invention, especially when taken in conjunction with the accompanying drawings wherein:
Fig. 1 is a side elevational view of a round baler incorporating the principles of the instant invention, portions of the round baler being broken away to better show the invention;
Fig. 2 is a partial front elevational view of the round baler corresponding to lines 2-2 of Fig. 1; portions of the central part of the round baler being broken away for purposes of clarity;
Fig. 3 is an enlarged partial cross-sectional view taken through the roll mounting apparatus corresponding to lines 3-3 of Fig. 2; the movement of a roll of netting material for loading into slotted openings, as well as the movement of a braking bar being shown in phantom;
Fig. 4 is an enlarged partial cross-sectional view of the roll mounting apparatus corresponding to lines 4-4 of Fig. 3 to depict a conical hub mounting a roll of netting material for rotation about a spindle;
Fig. 5 is an enlarged side elevational view corresponding to lines 5-5 in Fig. 2 but illustrating an alternative embodiment of the invention;
Fig. 6 is an enlarged partial cross-sectional view through the roll mounting apparatus corresponding to lines 6-6 of Fig. 5 to depict the relationship between the conical hub, the roll of netting material and a gate member supporting the end of the spindle on the round baler; and
Fig. 7 is a schematic partial side elevational view of the net dispensing apparatus utilized on the Claas Model Rollant 44 round baler which is prior art to the instant invention.

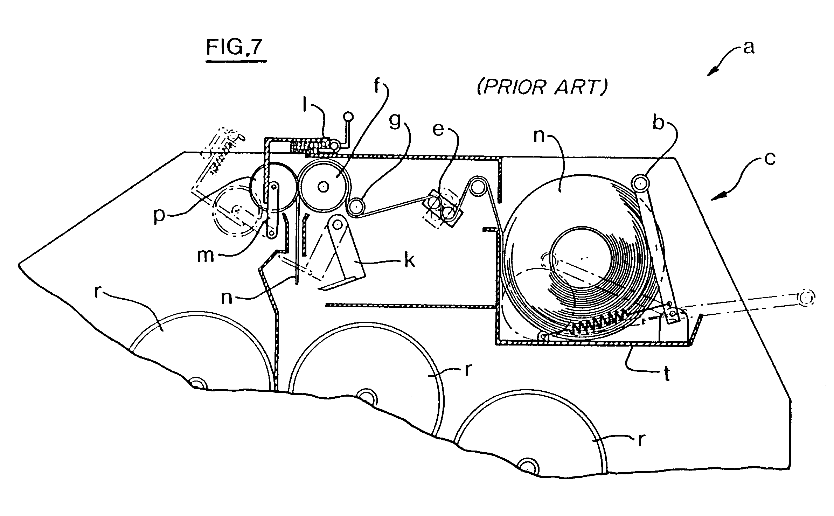

Referring first to Fig. 7, the Claas prior art net dispensing apparatus referred to above will be described in greater detail. The round baler (a) is of the fixed chamber type with a plurality of rollers (r) journalled between opposing side sheets to form a chamber therebetween in which the cylindrical bale is formed. The net dispensing apparatus (c) includes a tray (t) in which a roll of netting material (n) is disposed. A braking bar (b) held into position by an overcenter spring retains the roll of netting material (n) in position in the tray (t). The netting material is threaded through a pivotable braking apparatus (e), under a guide roller (g), around the feed roller (f), and between a pinch roller (p) and the feed roller (f). A swinging knife (k) is movable to engage the net between the feed roller (f) and the cylindrical bale to sever the net when a sufficient amount of net has been wrapped around the bale. The pinch roller (p) is mounted on pivot arms (m) equipped with a latching mechanism (l) to fixedly secure the pinch roller (p) against and into engagement with the feed roller (f).

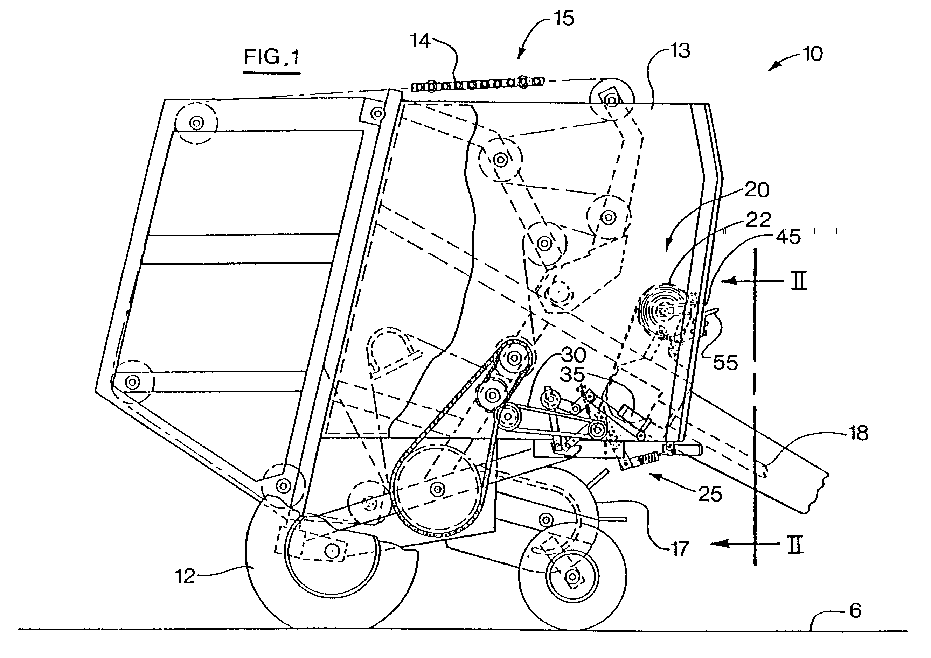

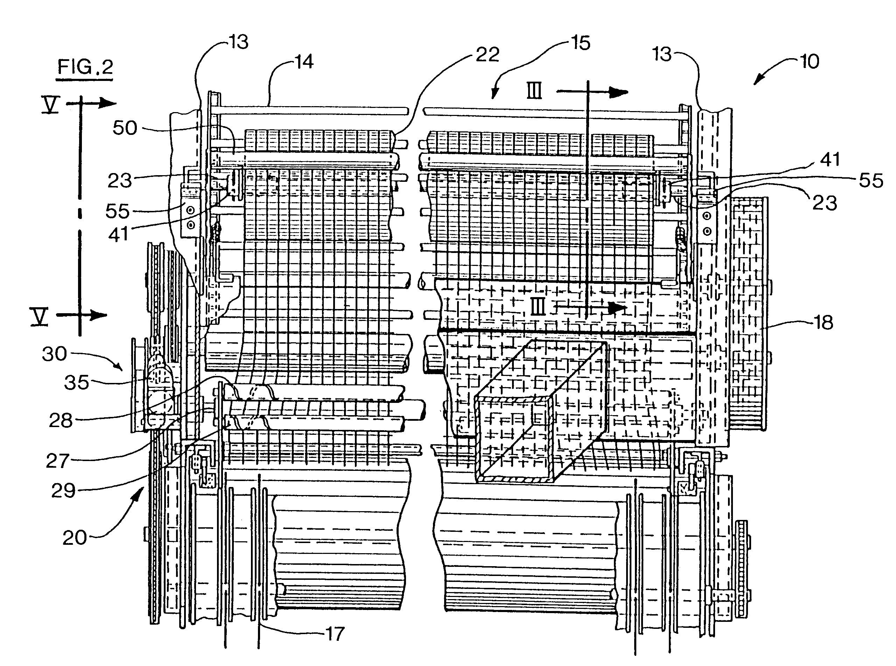

Referring now to the drawings and, particularly, to Figs. 1 and 2, side and front elevational views of a round baler incorporating the principles of the instant invention can be seen. Any left and right references are determined by standing at the rear of the machine and facing in the direction of operative travel. Also, terms such as "left", "right", "forward", "rearward", "transverse", etc.... are words of convenience and are not to be construed as limiting terms.

The round baler 10 is provided with a wheeled frame 12 and is adapted for movement over the ground G. The frame 12 supports a pair of generally vertical, transversely spaced apart side sheets 13 between which a chain and slat apron 14 is rotatably driven to form the bale forming mechanism 15 within which cylindrical bales of crop material are formed. A pickup 17 positioned adjacent the ground G delivers crop material from the ground G into the bale forming mechanism 15 in a conventional manner. A drive train 18 provides operational power to all the operable components within the round baler 10. This round baler 10, as described above, is of generally conventional construction and operation and is described in greater detail in US-A-4.426.833, the descriptive portion of which is incorporated herein by reference.

The round baler 10, however, has been modified to be equipped with a net dispensing apparatus 20. A roll of netting material 22 is mounted on a spindle 23 and rotatably journalled between the opposing side sheets 13 at a forward position of the round baler 10. The netting material 22 is threaded downwardly from the roll to a feeding mechanism 25 in the form of a feed roller 27 and first and second pinch rollers 28, 29. The net dispensing apparatus 20 also includes a pivoted knife assembly 31 used to sever the netting material 22 after a sufficient amount has been applied to the outer surface of the cylindrical bale, a drive mechanism 30 for operably powering the feed roll 27, and an actuating mechanism 35 for selectively engaging the drive mechanism 30 to effect a feeding of the netting material 22 into the bale forming mechanism 15. A more detailed description of the feeding mechanism 25 including the feed roller 27 and the pinch rollers 28, 29 and of the drive mechanism 30 to effect a feeding of the netting material 22 can be found in the co-pending European patent application No. 0.289.092, entitled "Feed Rolls for Round Baler Net Dispenser" and in the co-pending European patent application No. 0.293.025, entitled "Knife Assembly for Net Dispensing Apparatus"; both of which are filed concurrently herewith. The descriptive portions of the structure and operation thereof are incorporated herein by reference.

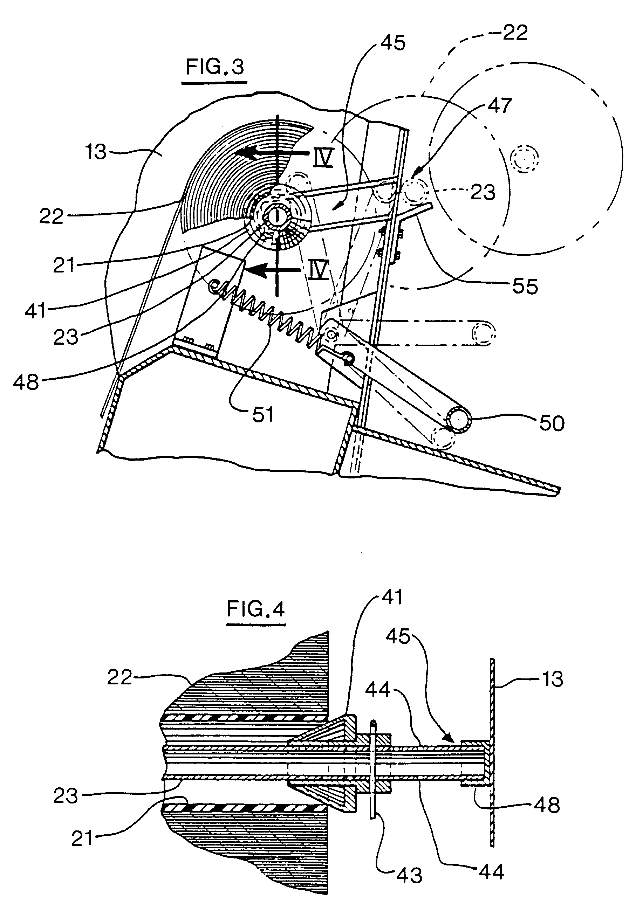

Referring now to Figs. 3 and 4, the first embodiment of the roll mounting apparatus can be seen. The roll of netting material 22 is typically provided with a hollow core 21 through which the spindle 23 can pass. A pair of hubs 41 are mounted on the spindle 23 to permit rotation relative thereto. The hubs 41 are also movable along the length of the spindle 23 and can be fixed in preselected places by means of cotter pins 43 or other fasteners extending through bearings for the hubs 41 and through appropriately aligned openings 44 in the spindle 23. The cone-shaped hubs 41 can accommodate various diameters of cores 21 while the selectable positionings of the hubs 41 along the length of the shaft 23 can permit the roll of netting material 22 to be centred between the respective side sheets 13.

A slot 45, preferably in the form of a channel welded to the inside of each respective sidewall 13 and having a forward opening 47 and a closed bottom 48, is positioned to receive the corresponding end of the spindle 23. The somewhat downward orientation of each slot 45 from the opening 47 to the bottom 48 thereof facilitates the loading of the spindle 23 with a roll of netting material 22 thereon into the bottoms 48 of the slots 45 where it is properly positioned to dispense netting material to the net dispensing apparatus 20. To further assure that the roll of netting material 22 is properly positioned within the slots 45, a braking bar 50 is spring loaded by overcenter springs 51 into engagement with the roll of netting material 22. The braking bar 50 also serves to restrain the freewheeling of the roll of netting material 22 to limit the dispensing therefrom to the amount of netting material 22 fed by the feeding mechanism 25. A guide tab 55 is affixed to each respective side sheet 13 immediately below and adjacent to the corresponding slot 45 to facilitate the loading of the spindle 23 into the slots 45.

As best seen in phantom in Fig. 3, once the roll of netting material has been mounted on the spindle 23 by the rotatable hubs 41, which in turn have been properly centred along the length of the spindle 23, the operator needs only to lift the roll of netting material 22 on top of the guide tabs 55 and the spindle 23 will roll by gravity to the bottom 48 of the respective slots 45. A repositioning of the braking bar 50 against the roll of netting material 22 further urges the spindle 23 carrying the roll of netting material 22 toward the bottom 48 of the slots 45, whereupon the netting material 22 can be threaded through the feeding mechanism 25 to permit proper operation of the net dispensing apparatus 20. Although Fig. 3 only depicts the left side sheet 13, one skilled in the art will readily realize that the opposing right side sheet 13 is also provided with the identical mechanism as described above with respect to the left side sheet shown in Fig. 3.

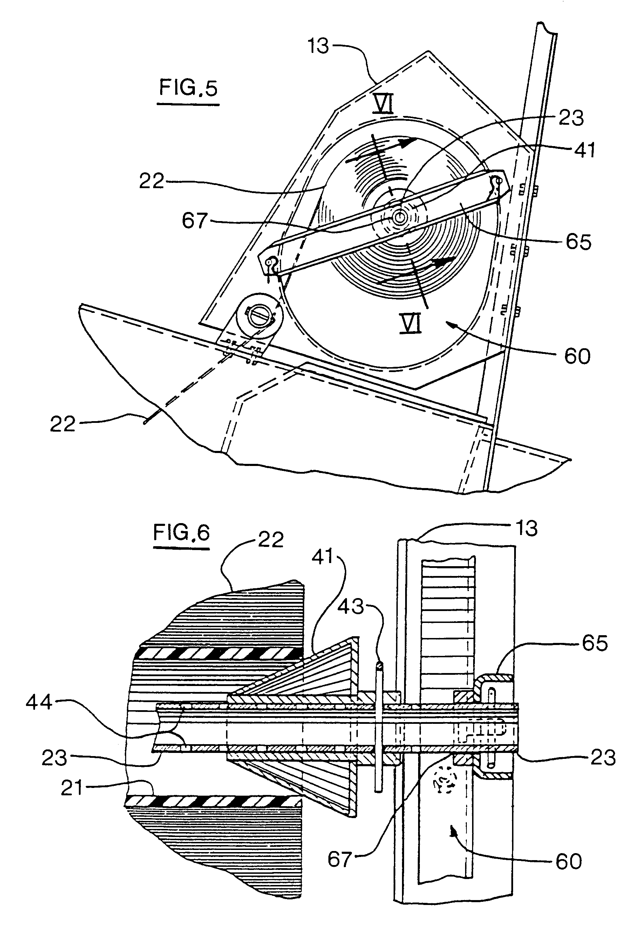

Referring now to Figs. 5 and 6, an alternative embodiment of the roll mounting apparatus can be seen. Although Figs. 1 and 2 illustrate the roll mounting apparatus described with respect to Figs. 3 and 4 above, Figs. 5 and 6 would correspond to lines 5-5 of Fig. 2 but altered to comprise the alternative embodiment. In some round balers 10, the bale forming mechanism 15 is so wide, i.e., the transverse distance between the side sheets 13 is so great, that a corresponding roll of netting material 22 would weigh too much to be loaded into the roll mounting mechanism described with respect to Figs. 3 and 4 above.

According to this alternative embodiment shown in Figs. 5 and 6, the right side sheet 13 is provided with an opening 60 to permit the passage of a roll of netting material 22 toward the opposing side sheet 13. The left side sheet 13 is equipped with a device for receiving the end of the spindle 23 similar to the channel bottom 48 shown in Fig. 4. The right side sheet 13 is provided with a detachable gate member 65 operable to span across the opening 60. The gate member 65 is provided with an opening 67 therethrough to receive the corresponding end of the spindle 23. Once the spindle 23 has been positioned to be supported between the left side sheet 13 and the gate member 65 which has been properly mounted on the right side sheet 13, the roll of netting material 22 is properly positioned in the round baler 10 for the dispensing of netting material 22 into the bale forming mechanism 15. As described with respect to Figs. 3 and 4 above, an overcenter braking bar 50 can be provided to restrain the rotation of the roll of netting material. Also, as described with respect to Figs. 3 and 4 above, the spindle 23 is equipped with a pair of hubs 41 rotatable relative thereto and positionable along the length thereof to accommodate various diameters of cores 21, as well as variable lengths of rolls of netting material 22.

## Claims

1. A round baler (10) having wrapper means (20) for selectively dispensing wrapping material (22) from a wrapping material supply source into a bale forming chamber defined between opposite sidewalls (13); said wrapper means (20) comprising supporting means (23, 41-67) including a spindle (23) insertable through a roll of wrapping material (22) forming said wrapping material supply source and engageable with supports (48/65) associated with both sidewalls (13) to support the wrapping material supply source on the baler (10) and
characterized in that :
- the spindle (23) is provided with a pair of spaced apart hubs (41) which are engageable with a roll of wrapping material (22) to support this roll on said spindle (23); said hubs (41), on the one hand, being positionally adjustable along the length of the spindle (23) to accommodate various widths of rolls of wrapping material (22) and to permit centring of any selected roll with respect to the bale forming chamber and, on the other hand, being rotatable relative to this spindle (23) to permit, during operation of the wrapper means (20), free rotation of this roll, and
- the wrapper means (20) further also comprise braking means including a braking member (50) and overcenter biasing means (51) cooperable with the braking member (50) for, in use, urging this braking member (50) into braking engagement with said roll to restrain said free rotational movement thereof.

2. A baler (10) according to claim 1 characterized in that the hubs (41) are in the shape of truncated cones.

3. A baler (10) according to claim 1 or 2 characterized in that the hubs (41) are positionable along the length of the spindle (23) into a plurality of preselected positions.

4. A baler (10) according to any of the preceding claims characterized in that the supports associated with the sidewalls (13) are formed by slots (45) which extend downwardly at an angle to the horizontal from an upper opening (47) to a closed bottom (48) and which are disposed to receive the opposing ends of the spindle (23).

5. A baler (10) according to claim 4 characterized in that each slot (45) is formed by a channel secured to the inner side of the corresponding sidewall (13).

6. A baler (10) according to claim 4 or 5 characterized in that each sidewall (13) is provided with an outwardly extending guide (55) positioned below and adjacent to the upper opening (47) of the corresponding slot (45) to guide the placement of the spindle (23) into the slots (45).

7. A baler (10) according to any of the claims 1 to 3 characterized in that :
- the spindle (23) has a length which is sufficient to span the distance between the opposing sidewalls (13) of which one has first mounting means for receiving a first end of the spindle (23) and the other has an opening (60) formed therein to accommodate the passage of a roll of wrapping material (22) therethrough; and
- a gate member (65) with second mounting means (67) for receiving the second end of the spindle (23), is detachably connectable to the other sidewall (13) at said opening (60); the arrangement being such that the spindle (23) with a roll of wrapping material (22) thereon may be inserted through said opening (60) in said other sidewall for support on the baler (10) between said first and second mounting means.

## Patentansprüche

1. Rundballenpresse (10) mit Wickeleinrichtungen (20) zum selektiven Abgeben von Wickelmaterial 22 von einer Wickelmaterial-Vorratsquelle in eine Ballenformungskammer, die zwischen gegeüberliegenden Seitenwänden (13) gebildet ist, wobei die Wickeleinrichtungen (20) Halterungseinrichtungen (23, 41-67) unter Einschluß einer Spindel (23) umfassen, die durch eine die Wickelmaterial-Vorratsquelle bildende Rolle von Wickelmaterial (22) hindurch einsetzbar und mit Halterungen (48/65) in Eingriff bringbar ist, die den beiden Seitenwänden (13) zugeordnet sind, um die Wickelmaterial-Vorratsquelle an der Ballenpresse (10) zu haltern,
dadurch gekennzeichnet, daß:
- die Spindel (23) mit zwei mit Abstand voneinander angeordneten Naben (41) versehen ist, die mit der Rolle von Wickelmaterial (22) in Eingriff bringbar sind, um diese Rolle auf der Spindel (23) zu haltern, wobei die Naben (41) einerseits positionsmäßig entlang der Länge der Spindel (23) einstellbar sind, um verschiedene Breiten von Rollen von Wickelmaterial (22) zu berücksichtigen und um eine Zentrierung irgend einer ausgewählten Rolle bezüglich der Ballenformungskammer zu ermöglichen, und andererseits gegenüber dieser Spindel (23) drehbar sind, um im Betrieb der Wickeleinrichtungen (20) eine freie Drehung dieser Rolle zu ermöglichen, und
- die Wickeleinrichtungen (20) weiterhin Bremseinrichtungen unter Einschluß eines Bremsteils (50) und EndlagenVorspanneinrichtungen (51) umfaßt, die mit dem Bremsteil (50) zusammenwirken können, um im Betrieb dieses Bremsteil (50) in einen Bremseingriff mit der Rolle zu drücken, um deren freie Drehbewegung zu hemmen.

2. Ballenpresse (10) nach Anspruch 1,
dadurch gekennzeichnet, daß die Naben (41) die Form von Kegelstümpfen aufweisen.

3. Ballenpresse (10) nach Anspruch 1 oder 2,
dadurch gekennzeichnet, daß die Naben (41) entlang der Länge der Spindel (23) auf eine Vielzahl von vorausgewählten Positionen einstellbar sind.

4. Ballenpresse (10) nach einem der vorhergehenden Ansprüche,
dadurch gekennzeichnet, daß die den Seitenwänden (13) zugeordneten Halterungen durch Schlitze (45) gebildet sind, die sich von einer oberen Öffnung (47) unter einem Winkel zur Horizontalen nach unten zu einem geschlossenen Boden (48) erstrecken und die zur Aufnahme der entgegengesetzten Enden der Spindel (23) angeordnet sind.

5. Ballenpresse (10) nach Anspruch 4,
dadurch gekennzeichnet, daß jeder Schlitz (45) durch einen Kanal gebildet ist, der an der Innenseite der entsprechenden Seitenwand (13) befestigt ist.

6. Ballenpresse (10) nach Anspruch 4 oder 5,
dadurch gekennzeichnet, daß jede Seitenwand (13) mit einer sich nach außen erstreckenden Führung (55) versehen ist, die unterhalb und benachbart zur oberen Öffnung (47) des entsprechenden Schlitzes (45) angeordnet ist, um das Einsetzen der Spindel (23) in die Schlitze (45) zu führen.

7. Ballenpresse (10) nach einem der Ansprüche 1 bis 3,
dadurch gekennzeichnet, daß:
- die Spindel (23) eine Länge aufweist, die ausreichend ist, um den Abstand zwischen den gegenüberliegenden Seitenwänden (13) zu überspannen, von denen die eine Seitenwand erste Befestigungseinrichtungen zur Aufnahme eines ersten Endes der Spindel (23) aufweist, während die andere Seitenwand eine darin ausgebildete Öffnung (60) aufweist, um den Durchgang einer Rolle von Wickelmaterial (22) durch diese Öffnung zu ermöglichen, und
- ein Verschlußteil (65) mit zweiten Befestigungseinrichtungen (67) zur Aufnahme des zweiten Endes der Spindel (23) lösbar mit der anderen Seitenwand (13) an der Öffnung (60) verbindbar ist, wobei die Anordnung derart ist, daß die Spindel (23) mit einer darauf befindlichen Rolle von Wickelmaterial (22) durch die Öffnung (60) in der anderen Seitenwand einsetzbar ist, um an der Ballenpresse (10) zwischen den ersten und zweiten Befestigungseinrichtungen gehaltert zu werden.

## Revendications

1. Ramasseuse-presse à balles rondes (10) équipée de moyens d'enveloppement (20) destinés à délivrer sélectivement à partir d'une source d'approvisionnement en matériau d'enveloppement un matériau d'enveloppement (22) dans une chambre de formage de balles définie entre des parois latérales opposées (13); lesdits moyens d'enveloppement (20) comportant des moyens de support (23, 41-67) qui comprennent un axe (23) apte à être inséré à travers un rouleau du matériau d'enveloppement (22), formant ladite source d'approvisionnement en matériau d'envoloppement, et à venir en prise avec des supports (48/65) associés aux deux parois latérales (13) pour supporter ladite source d'approvisionnement en matériau d'enveloppement sur la ramasseuse-presse (10) et
caractérisée en ce que :
- l'axe (23) est pourvu de deux moyeux (41) espacés l'un de l'autre qui sont aptes à venir en prise avec le rouleau du matériau d'enveloppement (22) pour supporter ce rouleau sur ledit axe (23); lesdits moyeux (41) pouvant, d'une part, être ajustés quant à leur position dans le sens de la longueur de l'axe (23) pour recevoir différentes largeurs de rouleaux du matériau d'enveloppement (22) et pour permettre un centrage de n'importe quel rouleau sélectionné par rapport à la chambre de formage de balles et, d'autre part, tourner par rapport à cet axe (23) pour permettre une rotation libre de ce rouleau pendant un fonctionnent des moyens d'enveloppement (20), et
- les moyens d'enveloppement (20) comportent, en outre, des moyens de freinage qui comprennent un organe de freinage (50) et des moyens de sollicitation à détente brusque (51) aptes à coopérer avec l'organe de freinage (50) pour, en service, solliciter cet organe de freinage (50) afin qu'il vienne en contact de freinage avec ledit rouleau en vue de limiter ledit mouvement en rotation libre de celui-ci.

2. Ramasseuse-presse (10) selon la revendication 1, caractérisée en ce que les moyeux (41) se présentent sous la forme de cônes tronqués.

3. Ramasseuse-presse (10) selon la revendication 1 ou 2, caractérisée en ce que les moyeux (41) sont aptes à être placés dans plusieurs positions présélectionnées dans le sens de la longueur de l'axe (23).

4. Ramasseuse-presse (10) selon l'une quelconque des revendications précédentes, caractérisée en ce que les supports associés aux parois latérales (13) sont formés par des fentes (45) qui s'étendent vers le bas suivant un certain angle par rapport à l'horizontale depuis une ouverture supérieure (47) jusqu'à un fond fermé (48) et qui sont disposées pour recevoir les extrémités opposées de l'axe (23).

5. Ramasseuse-presse (10) selon la revendication 4, caractérisée en ce que chaque fente (45) est formée par un profilé en U assujetti à la face intérieure de la paroi latérale (13) correspondante.

6. Ramasseuse-presse (10) selon la revendication 4 ou 5, caractérisée en ce que chaque paroi latérale (13) est pourvue d'un organe de guidage (55) qui s'étend vers l'extérieur et qui est positionné audessous et à proximité de l'ouverture supérieure (47) de la fente (45) correspondante pour guider la mise en place de l'axe (23) dans les fentes (45).

7. Ramasseuse-presse (10) selon l'une quelconque des revendications 1 à 3, caractérisée en ce que :
- l'axe (23) a une longueur suffisante pour s'étendre sur la distance comprise entre les parois latérales opposées (13) dont la première possède des premiers moyens de montage destinés à recevoir une première extrémité de l'axe (23), tandis que la seconde comporte, définie en elle, une ouverture (60) destinée à permettre le passage d'un rouleau du matériau d'enveloppement (22) à travers elle; et
- un organe formant porte (65) pourvu de seconds moyens de montage (67) destinés à recevoir la seconde extrémité de l'axe (23), peut être relié d'une manière détachable à la seconde paroi (13) au niveau de ladite ouverture (60); le dispositif étant tel que l'axe (23) portant sur lui un rouleau du matériau d'enveloppement (22) peut être inséré à travers ladite ouverture (60) définie dans ladite seconde paroi latérale pour être supporté sur la ramasseuse-presse (10) entre lesdits premiers et seconds moyens de montage.
